# FASCICULE DE BREVET EUROPEEN

(11) **EP 2 186 632 B1**
(45) Date de publication et mention de la délivrance du brevet: **24.05.2017**
(21) Numéro de dépôt: 09014284.5
(22) Date de dépôt: 16.11.2009
(51) Int. Cl.: B30B 11/08, B30B 15/00, B30B 15/02

(54) **Système de montage de poinçons coulissants dans une presse à comprimés**
Mounting system for sliding punches in a tablet press
Befestigungssystem für verschiebliche Stempel in einer Tablettenpresse

(30) Priorité: 14.11.2008 FR 0806353
(43) Date de publication de la demande: 19.05.2010
(73) Titulaire: Elizabeth Europe, 41260 La Chaussée-Saint-Victor (FR)
(72) Inventeur: Creus, Richard, 44380 Pornichet (FR)
(74) Mandataire: Thibon-Littaye, Annick

(56) Documents cités:
- EP-A- 1 679 181
- WO-A-95/20484
- WO-A-02/064356
- WO-A-2006/081908
- WO-A-2007/131632
- DE-U1- 20 304 981
- DE-U1-202007 002 707
- JP-A- 11 120 997
- JP-A- 2003 311 493

## Description

La présente invention concerne les machines à fabriquer les comprimés par compactage, en particulier (bien que non limitativement) celles qui sont du type rotatif. De manière en soi connue, ces machines comportent un plateau tournant présentant des matrices de réception de la poudre à comprimer entre des poinçons et des contre-poinçons qui sont respectivement portés par deux autres plateaux de la même tourelle. Dans la position normale de fonctionnement, les poinçons du plateau supérieur sont mobiles par coulissement dans des alésages guides formés dans ce plateau. Ils sont commandés pour se déplacer entre une position basse où ils compriment la poudre se trouvant dans la matrice en regard contre un fond qui est formé par l'un des contre-poinçons portés par le plateau inférieur de la tourelle, et une position haute de retrait livrant accès au plateau à matrices, comme on en a besoin en particulier pour le remplissage de chaque matrice.

Le problème auquel s'attelle la présente invention concerne le montage et le démontage des soufflets de rétention d'huile de lubrification qui enveloppent les différents poinçons mobiles entre l'extrémité inférieure de chacun et le plateau porte-poinçons, en se raccordant là autour de l'alésage de guidage correspondant. La présente invention propose d'assurer la liaison mécanique étanche entre l'extrémité arrière ou supérieure du soufflet et le plateau porte-poinçons par une bague amovible, qui se fixe de manière démontable sous le plateau porte-poinçons.

L'art antérieur en la matière est illustré par la demande de brevet internationale WO-A-02/064356, laquelle décrit une presse à comprimés selon le préambule de la revendication 1. On observe dans ce document qu'il existe une pièce intermédiaire entre le soufflet et le plateau porte-poinçons, mais cet élément est manifestement solidaire du plateau porte-poinçons. Il forme là, sur place, la gorge périphérique dans laquelle s'enclipse le bourrelet d'extrémité du soufflet. Autrement dit, la bague sur laquelle se monte l'extrémité du soufflet est fixée solidaire du plateau. Elle ne peut pas en être démontée. Le mode de clipsage implique que l'opérateur exerce un effort radial pour extraire le bourrelet de sa gorge, effort qui doit en outre se répéter tout autour de cette gorge.

On conçoit dès lors que pour accéder du côté interne de l'ensemble des poinçons en répartition annulaire autour de l'axe de la tourelle, l'opération oblige à démonter les poinçons adjacents avec leur soufflet. La disposition compacte habituelle dans ces machines ne permet pas d'autres accès. En inconvénient supplémentaire, l'opération de démontage du soufflet est des plus délicates et la plupart du temps on ne sait éviter la détérioration du soufflet lui-même, au moins au niveau de son bourrelet supérieur enclipsé autour de l'extrémité de l'alésage guide du plateau porte-poinçons.

La présente invention permet d'éviter ces inconvénients et tout ceux qui en découlent. Le problème est donc résolu par une presse à comprimés possédant les caractéristiques de la revendication 1. Cela permet d'engager le bourrelet supérieur du soufflet par avance dans une gorge ménagée à cet effet dans la bague amovible et de manipuler ensuite l'ensemble en tenant la bague. La bague est un élément intermédiaire séparable du plateau porte-poinçons qui est également distincte du soufflet. On peut donc utiliser librement des matières différentes en tenant compte des besoins de rigidité de la bague de montage et du besoin de souplesse du soufflet en fonctionnement.

Un accouplement par attraction magnétique entre la bague de montage du soufflet et la face inférieure du plateau porte-poinçoins, est tel que le montage et le démontage de la bague portant le soufflet demandent exclusivement à l'opérateur un effort manuel à exercer dans le sens axial en agissant sur la bague elle-même.

D'autres caractéristiques et avantages de l'invention ressortiront de la description qui suit ainsi que des figures ci-après. L'invention y est illustrée dans le cadre de sa mise en oeuvre sur un plateau porte-poinçons supérieur dans une machine à comprimés de type rotatif. Parmi ces figures :

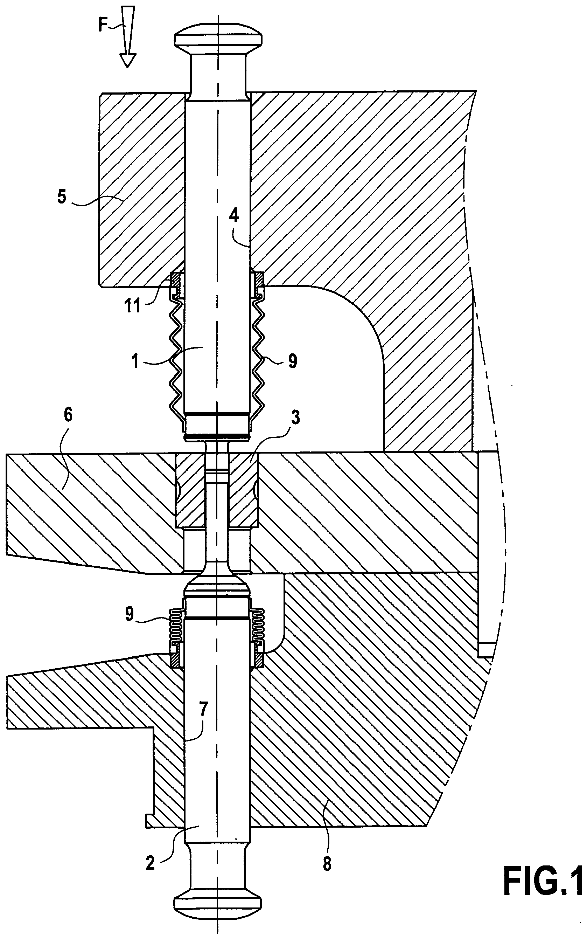

- la figure 1 est une vue schématique en coupe longitudinale d'une partie d'une machine à comprimés de type rotatif, faisant apparaître le plateau porte-poinçons supérieur ainsi que la matrice de formage et le contre-poinçon associé en position de compression de poudre pour la fabrication d'un comprimé,

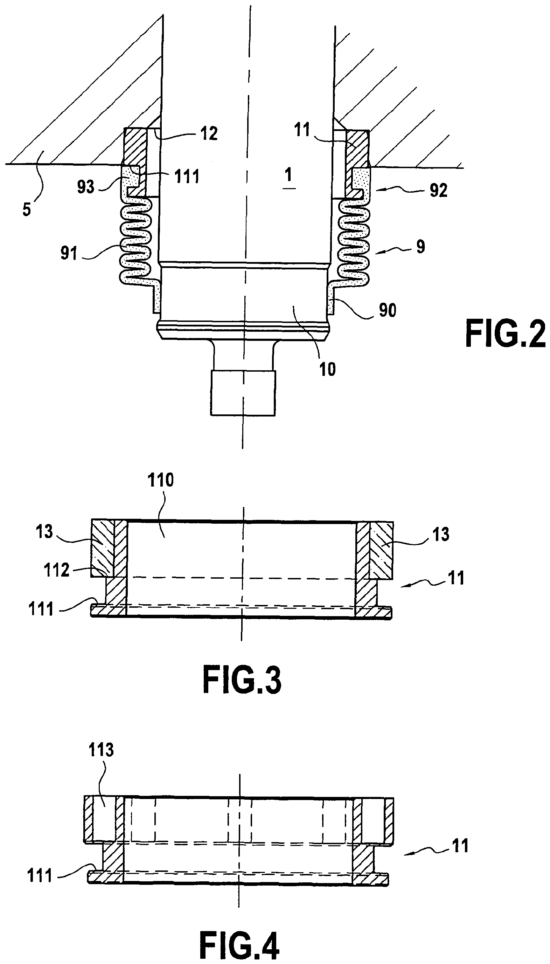

- la figure 2 est une vue rapprochée illustrant le montage du soufflet sur le poinçon et sur le plateau porte-poinçons selon l'invention,
- les figures 3 et 4 sont des vues en coupe longitudinale de deux modes de réalisation des moyens d'accouplement magnétique d'une bague amovible selon l'invention,

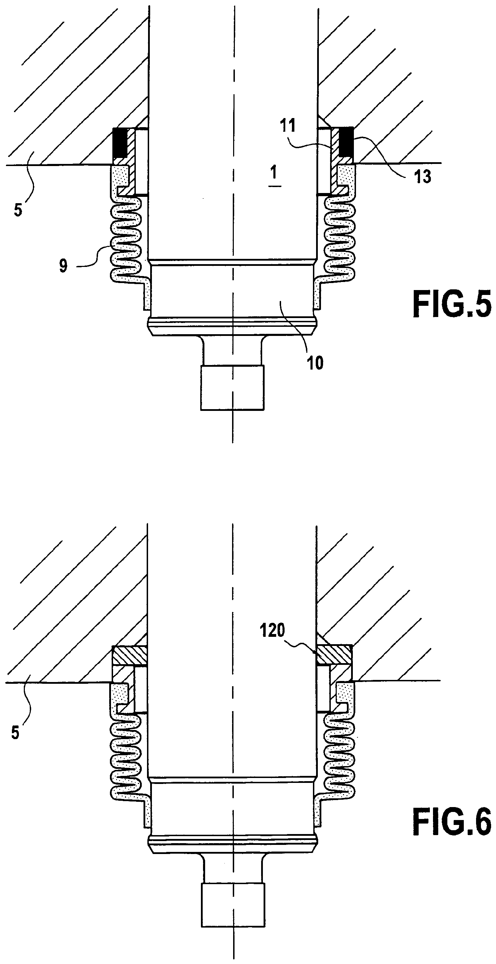

- les figures 5 et 6 sont des vues en coupe longitudinale de différents modes de réalisation de l'invention concernant l'insertion d'une bague amovible selon l'invention dans un plateau porte-poinçons supérieur, selon que ce dernier est réalisé respectivement dans un matériau magnétique ou dans un matériau amagnétique,

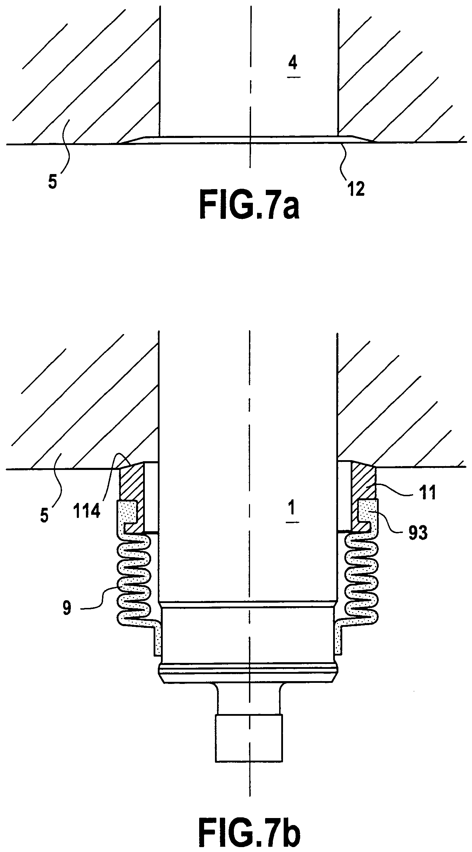

- et les figures 7a et 7b sont des vues en coupe longitudinale d'une variante de réalisation de l'invention dans laquelle la bague amovible et l'épaulement interne du plateau porte-poinçons supérieur présentent des formes tronconiques complémentaires : la figure 7a est une vue du plateau porte-poinçons seul, la figure 7b est une vue du plateau porte-poinçons assemblé avec la bague de liaison dans ce cas.

Ainsi que le montre la figure 1, un comprimé est obtenu par compression, entre un poinçon 1 et un contre-poinçon 2, d'une quantité prédéfinie de poudre placée dans une matrice de formage 3.

Le poinçon 1 coulisse en translation vers le bas, selon le sens indiqué par la flèche F, dans un guide de coulissement 4 ménagé dans un plateau porte-poinçons supérieur 5. La matrice de formage 3 est, pour sa part, insérée dans un plateau intermédiaire 6 (ou plateau à matrices), et le contre-poinçon 2 est monté dans un guide de coulissement 7 ménagé dans un plateau inférieur 8.

L'étanchéité des circuits de lubrification du poinçon 1 et du contre-poinçon 2 au regard de la poudre placée dans la matrice de formage 3 est réalisée au moyen de soufflets de raccordement étanches 9. Chacun de ces soufflets constitue un manchon qui est fixé, d'une part, sur le poinçon ou le contre-poinçon et, d'autre part, sur le plateau porte-poinçon correspondant : plateau supérieur 5 pour le poinçon 1, et plateau inférieur 8 pour le contre-poinçon 2. Le soufflet 9 correspondant au poinçon supérieur 1 sera décrit dans ce qui suit, le soufflet correspondant au contre-poinçon 2 étant similaire, mais en position inversée.

Préférentiellement réalisé dans un matériau à base d'élastomère, le soufflet 9 est sensiblement formé de trois parties : une partie inférieure lisse 90, une partie intermédiaire dilatable par élongation axiale 91, et une partie supérieure 92 (voir figure 2).

Le diamètre intérieur de la partie inférieure 90 du soufflet est très légèrement inférieur au diamètre extérieur de la partie basse du poinçon 1. Le poinçon 1 comporte en outre, en sa partie inférieure, une gorge annulaire périphérique de faible profondeur 10. Cette gorge est apte à la réception élastique et à la retenue axiale de la partie inférieure 90 du soufflet. A titre d'exemple non limitatif, la profondeur de la gorge annulaire 10 peut être typiquement de l'ordre de quelques fractions de millimètre à 1 à 2 millimètres. Le poinçon 1 peut ainsi être enfilé par le haut dans le soufflet 9 : en sa partie inférieure 90, l'élasticité du matériau constituant le soufflet permet à la fois une déformation suffisante de celui-ci pour permettre le passage du poinçon 1 et un manchonnage serré de celui-ci, et la paroi supérieure de la gorge annulaire 10 forme une butée pour maintenir en place le soufflet qui ne peut alors plus remonter le long du poinçon 1.

En sa partie supérieure 92, le soufflet 9 comporte un bourrelet interne annulaire 93. Ce bourrelet est apte à coopérer avec une gorge annulaire 111 ménagée en périphérie extérieure de la partie inférieure d'une bague de montage amovible 11 dont la partie supérieure est insérée dans un épaulement intérieur 12 ménagé dans le plateau porte-poinçons supérieur 5, autour de l'orifice débouchant inférieur du guide 4 dans lequel coulisse le poinçon 1 dans ce plateau.

Chacune des bagues amovibles 11 de la presse à comprimés selon l'invention est percée d'un orifice central axial 110 pour accueillir le poinçon 1 correspodant. Elle comporte par ailleurs des moyens d'accouplement magnétique au plateau porte-poinçons.

Les figures 3 et 4 illustrent différents modes de réalisation de cette bague.

Selon le mode de réalisation illustré par la figure 3, la bague 11 comporte ici un épaulement 112 apte à accueillir en appui un aimant annulaire 13 représenté en traits discontinus sur la figure 3, aimant annulaire dont la face inférieure forme en partie la paroi supérieure de la gorge 111.

Selon le mode de réalisation illustré par la figure 4, la bague 11 comporte, en sa partie supérieure, un ensemble de cavités axiales 113 disposées annulairement autour de l'orifice central 110 et chacune apte à recevoir un aimant, par exemple un aimant cylindrique, non représentés sur la figure.

La mise en place du soufflet de rétention d'huile est effectuée de la manière suivante.

Dans un premier temps, le bourrelet 93 du soufflet 9 est mis en place dans la gorge 111 de la bague 11 munie de ses moyens magnétiques (aimant annulaire 13 ou aimants élémentaires insérés dans les cavités 113). L'ensemble ainsi constitué est ensuite inséré à la main dans l'orifice débouchant du guide de coulissement 4 sur la face inférieure du plateau porte-poinçons.

Si le plateau porte-poinçon 5 est réalisé dans un matériau magnétique, tel qu'une fonte, les moyens magnétiques dont est munie la bague 11 coopèrent notamment avec le fond de l'épaulement interne 12 pour maintenir cette bague en place par effet magnétique s'exerçant en direction axiale. La force résultant du champ magnétique créé par les moyens d'aimant situés en partie terminale de la bague amovible suffit à maintenir en place cette bague dans l'épaulement interne qui l'accueille dans le plateau porte-poinçons.

Ce mode de réalisation est plus spécifiquement illustré par la figure 5. Il est à noter ici que l'emploi de moyens d'accouplement magnétique entre la bague 11 et le plateau porte-poinçons, et, notamment, le fait que l'effet magnétique s'exerce axialement selon le sens indiqué par la flèche M sur la figure 5, permettent une diminution de la profondeur de l'épaulement 12 au regard de la profondeur nécessaire lorsque la bague est insérée à force dans le plateau porte-poinçons. Il s'ensuit un nettoyage plus facile de cette région lors des démontages et remontages en remplacement du soufflet de rétention d'huile.

Si, en revanche, le plateau porte-poinçons est réalisé dans un matériau amagnétique (ce qui est le cas, par exemple, quand il est en acier inoxydable, l'invention prévoit que le fond du dégagement interne du plateau porte-poinçons destiné à recevoir la bague amovible soit recouvert de moyens aimantés complémentaires agissant en coopération avec les moyens d'aimant de la bague amovible. Cette solution est illustrée par la figure 6. On y voit une cavité 120 qui est usinée en fond de l'épaulement 12 pour accueillir des moyens aimantés, non représentés sur la figure (par exemple un aimant annulaire), qui coopèrent alors avec les moyens aimantés de la bague 11 par effet axial de la même manière que précédemment.

Quelle que soit la nature du plateau porte-poinçons 5, le sous-ensemble formé du soufflet 9 et de la bague amovible 11 est ensuite fixé au plateau porte-poinçons 5. Ainsi que cela a été mentionné plus haut, les différents moyens aimantés sont avantageusement dimensionnés de telle manière que l'effort de traction qui s'exerce sur la bague 11 du fait de l'élongation de la partie 91 du soufflet 9 lorsque le poinçon 1 coulisse ne suffise pas à désolidariser la bague 11 du plateau porte-poinçons 5, mais que cette bague (ou le sous-ensemble qu'elle forme avec le soufflet 9) puisse être retirée manuellement par traction sur la bague à partir de la face inférieure du plateau.

Il est à noter par ailleurs que, pour faciliter l'insertion du sous-ensemble formé par le soufflet et la bague sur le plateau porte-poinçons, et afin de réaliser un centrage automatique de ce sous-ensemble lors de cette opération, l'épaulement 12 peut présenter, ainsi que le montrent les figures 7a et 7b, une forme sensiblement tronconique, la bague 11 présentant une forme tronconique complémentaire.

Dans ce cas, l'épaulement 12 se réduit selon la figure 7a à un dégagement de faible profondeur qui se présente sous la forme d'un simple chambrage dans lequel la partie tronconique complémentaire 114 de la bague amovible en sa partie aimantée vient en appui. Un tel mode de réalisation présente un avantage supplémentaire en ce qu'il simplifie encore le nettoyage du plateau porte-poinçons lors d'une opération de remplacement du soufflet 9, la zone à nettoyer présentant alors un minimum d'aspérités et de recoins. L'effet magnétique s'exerçant axialement entre les portées tronconiques complémentaires, ce mode de réalisation permet également une fixation efficace de la bague sur le plateau.

Une fois la bague amovible et le soufflet mis en place sur le plateau porte-poinçons 5, il suffit d'insérer le poinçon 1 dans son guide de coulissement 4 par le haut. Lorsque la partie inférieure du poinçon 1 arrive au niveau de la partie inférieure 90 du soufflet 9, elle y est alors enfilée, son passage étant favorisé par la déformation élastique du matériau constituant le soufflet 9. Ce dernier est ensuite arrêté dans la gorge 10 réalisée en partie basse du poinçon.

Quand les différents éléments sont ainsi assemblés et montés, l'étanchéité de la partie coulissante du poinçon 1 au regard de la poudre à comprimer placée dans une matrice de formage 3 est assurée de manière performante :
- entre le soufflet 9 et le poinçon 1 : par le contact étroit de la partie basse 90 du soufflet sur la partie inférieure du poinçon 1, du fait de l'élasticité naturelle du matériau qui constitue le soufflet,
- entre le soufflet 9 et la bague de liaison 11 : par le contact du bourrelet interne 93 du soufflet sur la partie complémentaire 111 de la bague,
- entre la bague amovible 11 et le plateau porte-poinçons 5 : par le contact surfacique résultant de l'accouplement magnétique entre la bague amovible et le plateau.

Il est à noter que cette étanchéité permet à la fois, d'une part, de protéger le poinçon 1 au regard de la poudre à comprimer sur la majeure partie de sa longueur, à l'exception de la partie destinée à venir au contact de cette dernière, ce qui permet également d'éviter tout risque de grippage du dispositif de coulissement, et, d'autre part, de protéger la poudre de toute pollution provenant de la partie coulissante du poinçon (lubrifiant, par exemple, ou particules d'usure).

Dans les différentes variantes de réalisation qui viennent d'être évoquées, l'invention simplifie le montage et le démontage des soufflets sur les poinçons et le plateau porte-poincons. Grâce à l'effet magnétique induit par le ou les aimants de la bague amovible et, selon le mode de réalisation adopté, par l'élément magnétique inséré au fond de l'épaulement interne du plateau porte-poinçons proprement dit, un pré-assemblage du soufflet avec la bague amovible peut être réalisé indépendamment de la machine, le sous-ensemble ainsi réalisé étant ensuite monté sur le plateau porte-poinçons par simple mise en place manuelle dans l'épaulement interne prévu à cet effet. Ceci permet, en premier lieu, un gain de temps appréciable lors d'opérations de remplacement du soufflet. De plus, ceci permet de fiabiliser l'assemblage et de garantir la reproductibilité de l'étanchéité entre le soufflet et le plateau porte-poinçons en supprimant tout risque de mauvais positionnement du soufflet relativement, par exemple, à la bague amovible. Ceci ouvre en outre la possibilité de disposer d'une réserve d'éléments "bague amovible/soufflet" pré-assemblés qui peuvent être rapidement échangés sur la machine par exemple lors de changements de fabrication.

## Revendications

1. Presse à comprimés comportant des poinçons coulissants dans des guides (4) ménagés dans un plateau porte-poinçons pour comprimer de la poudre préalablement placée dans des matrices de formage, dans laquelle il est associé à chaque poinçon un soufflet (9) de raccordement étanche entre ledit poinçon (1) et ledit plateau porte-poinçons (5), la presse étant telle que pour chaque poinçon elle comporte une bague amovible (11) de montage et démontage de l'ensemble dudit soufflet avec la bague correspondante associée audit poinçon, la presse étant **caractérisée en ce que** ladite bague (11) se fixe audit plateau porte-poinçons par accouplement magnétique, ladite bague étant distincte dudit soufflet et séparable dudit plateau par traction manuelle sur ladite bague en direction axiale.

2. Presse à comprimés selon la revendication 1, **caractérisée en ce que** ledit accouplement magnétique est par des moyens d'aimant qui sont dimensionnés de telle manière que l'effort de traction qui s'exerce sur la bague (11) du fait de l'élongation du soufflet (9) lorsque le poinçon (1) coulisse ne suffise pas à désolidariser la bague (11) du plateau porte-poinçons, mais que ladite bague puisse être retirée manuellement par traction sur la bague à partir de la face inférieure du plateau.

3. Presse à comprimés selon la revendication 1 ou 2, **caractérisée en ce que** ledit plateau porte-poinçons comporte, en sa face située en regard des matrices de formage, autour de l'extrémité débouchante de chacun desdits guides de coulissement (4), un dégagement interne (12) de réception de moyens d'aimant pour accouplement magnétique axial de ladite bague (11) avec ledit plateau de manière manuellement séparable par traction axiale de ladite bague et **en ce que** la bague amovible (11) comporte une partie terminale aimantée de forme adaptée pour coopérer avec un épaulement interne (12) du guide de coulissement du poinçon constituant ledit dégagement en assurant ledit accouplement magnétique, et **en ce que** ladite bague présente, sur sa périphérie extérieure, une gorge (111) de réception d'un bourrelet interne (93) réalisé à l'une des extrémités du soufflet (9) pour assurer la liaison étanche de ce dernier avec ladite bague, ledit soufflet étant monté étanche sur le poinçon coulissant à son autre extrémité.

4. Presse à comprimés suivant la revendication 3, **caractérisée en ce que** ladite partie terminale de la bague amovible (11) est réalisée sous la forme d'un aimant annulaire (13) rapporté sur la périphérie extérieure du corps de la bague.

5. Presse à comprimés suivant la revendication 3, **caractérisée en ce que** ladite partie terminale de la bague amovible (11) forme un ensemble de logements (113) en disposition annulaire qui sont propres à accueillir un ensemble d'aimants.

6. Presse à comprimés selon l'une quelconque des revendications 3 à 5 dans laquelle, le plateau porte-poinçons étant réalisé dans un matériau amagnétique, il comporte, pour coopérer par attraction magnétique avec ladite partie terminale aimantée de ladite bague, un anneau aimanté se fixant en fond dudit dégagement interne du plateau porte-poinçons.

7. Presse à comprimés suivant la revendication 6, dans laquelle ledit dégagement interne (12) du plateau porte-poinçons comporte un ensemble de cavités (120) aptes à accueillir un ensemble d'aimants constituant ledit anneau.

8. Presse à comprimés suivant la revendication 6 ou 7, **caractérisée en ce que** ledit dégagement interne (12) présente une forme tronconique coopérant par effet de centrage avec une portée tronconique complémentaire de la bague (11) en sa partie terminale.

9. Presse à comprimés selon l'une ou l'autre des revendications 1 à 8, dans laquelle chaque soufflet (9) est formé dans un matériau élastomère de telle manière qu'en son extrémité opposée à l'extrémité par laquelle il est lié à la bague amovible (11), il s'engage à force dans une gorge (10) du poinçon correspondant formant butée pour le retenir axialement.

## Patentansprüche

1. Tablettenpresse, die in Führungen (4) gleitende Stempel umfasst, die in einer Stempelaufnahmeplatte angeordnet sind, um Pulver zu verdichten, das zuvor in formgebende Matrizen angeordnet wird, in der jedem Stempel ein Faltenbalg (9) zugeordnet wird, zum dichten Anschluss zwischen dem genannten Stempel (1) und der genannte Stempelaufnahmeplatte (5), wobei die Presse derart ist, dass sie für jeden Stempel einen lösbaren Ring (11) zur Montage und Demontage der Anordnung aus dem genannten Faltenbalg und dem entsprechenden mit dem genannten Stempel verknüpften Ring aufweist, wobei die Presse **dadurch gekennzeichnet ist, dass** der genannte Ring (11) an der genannten Stempelaufnahmeplatte durch magnetische Kopplung befestigt wird, wobei der genannte Ring vom genannten Faltenbalg getrennt ist und von der genannten Platte durch manuellen Zug am genannten Ring in axialer Richtung lösbar ist.

2. Tablettenpresse nach Anspruch 1, **dadurch gekennzeichnet, dass** die genannte magnetische Kopplung durch Magnetvorrichtungen erreicht wird, die derart bemessen werden, dass die Zugkraft, die auf den Ring (11), als Ergebnis der Verlängerung des Faltenbalgs (9) bei gleitendem Stempel (1) ausgeübt wird, nicht ausreicht, um den Ring (11) von der Stempelaufnahmeplatte zu lösen, und dass der genannte Ring dagegen manuell durch Zug am Ring, ausgehend von der Unterseite der Platte entfernt werden kann.

3. Tablettenpresse nach Anspruch 1 oder 2, **dadurch gekennzeichnet, dass** die genannte Stempelaufnahmeplatte, an ihrer Seite, die den formgebenden Matrizen zugewandt ist, um das auslaufende Ende einer jeden der genannten Gleitführungen (4) eine innere Aussparung (12) umfasst, für den Empfang der Magnetvorrichtungen zur manuell durch axialen Zug von genannten Ring lösbaren axialen magnetischen Kopplung des genannten Rings (11) mit der genannten Platte, und dadurch, dass der lösbare Ring (11) einen magnetisierten Endabschnitt umfasst, dessen Form für ein Zusammenwirken mit einer inneren Schulter (12) der Gleitführung des Stempels angepasst ist, die die genannte Aussparung bildet, indem die magnetische Kopplung gewährleistet wird, und dadurch, dass der genannte Ring an seinem Außenumfang eine Nut (111) zur Aufnahme eines Innenwulstes (93) aufweist, der an einem der Enden des Faltenbalgs (9) hergestellt wird, um die leckdichte Verbindung zwischen diesem und dem genannten Ring zu gewährleisten, wobei der genannte Faltenbalg leckdicht am Stempel montiert wird, der an seinem anderen Ende gleitet.

4. Tablettenpresse nach Anspruch 3, **dadurch gekennzeichnet, dass** der genannte Endabschnitt des lösbaren Rings (11) in Form eines ringförmigen Magneten (13) hergestellt wird, der am Außenumfang der Ringkörpers angebracht wird.

5. Tablettenpresse nach Anspruch 3, **dadurch gekennzeichnet, dass** der genannte Endabschnitt des lösbaren Rings (11) einen Satz von ringförmig angeordneten Aufnahmen (113) bildet, die dazu geeignet sind, einen Satz von Magneten aufzunehmen.

6. Tablettenpresse nach irgendeinem der Ansprüche 3 bis 5, wobei die Stempelaufnahmeplatte, da sie aus einem nichtmagnetischen Material hergestellt wird, einen magnetisierten Ring umfasst, der am Boden der genannten inneren Aussparung der Stempelaufnahmeplatte befestigt ist, um durch magnetische Anziehung mit dem genannten magnetisierten Endabschnitt des genannten Rings zusammenzuwirken.

7. Tablettenpresse nach Anspruch 6, wobei die genannte innere Aussparung (12) der Stempelaufnahmeplatte einen Satz von Hohlräumen (120) umfasst, die dazu geeignet sind, einen Satz von Magneten aufzunehmen, die den genannten Ring bilden.

8. Tablettenpresse nach Anspruch 6 oder 7, die **dadurch gekennzeichnet ist, dass** die genannte innere Aussparung (12) die Form eines Kegelstumpfes aufweist, die durch Zentrierwirkung mit einer komplementären kegelstumpfförmigen Auflagefläche des Rings (11) an seinem Endteil zusammenwirkt.

9. Tablettenpresse nach irgendeinem der Ansprüche von 1 bis 8, wobei jeder Faltenbalg (9) aus einem elastomeren Material hergestellt wird, sodass er an seinem Ende, das dem Ende, mit dem er an den lösbaren Ring (11) gebunden ist, gegenübersteht, in einer Nut (10) des entsprechenden Stempels kraftschlüssig im Eingriff steht, die zum axialen Halten einen Anschlag bildet.

## Claims

1. Tablet press including punches sliding on guides (4) provided in a punches holder plate in order to compress powder beforehand provided into forming dies, wherein associated with each punch is a bellows (9) intended to make a tight connection between said punch (1) and said punches holder plate (5), the press being such that for each punch it comprises a removable ring (11) for the assembly and the disassembly of the set of said bellows with the corresponding ring associated to said punch, the press being **characterized in that** said ring (11) is attached to said punches holder plate by magnetic coupling, said ring being separate from said bellows and separable from said plate by manual traction on said ring in axial direction.

2. Tablet press according to claim 1, **characterized in that** said magnetic coupling is provided by magnet means that are sized in such a way that the driving force which is exerted on the ring (11) because of elongation of the bellows (9) when the punch (1) slides is not enough to separate the ring (11) from the punches holder plate, but that said ring can be manually withdrawn by traction on the ring from the lower side of the plate.

3. Tablet press according to claim 1 or 2, **characterized in that** said punches holder plate comprises, in its side located at the opposite of forming dies, about the open end of each one of said sliding guides (4), an internal formation (12) intended to receive magnet means to provide axial magnetic coupling of said ring (11) with said plate in a manually separable way by axial traction of said ring and **in that** the removable ring (11) includes a magnetized end part having a shape adapted to cooperate with an internal shoulder (12) of the punch sliding guide constituting said formation by ensuring said magnetic coupling, and **in that** said ring has, on its external periphery, a throat (111) to receive an internal pad (93) provided on one of the bellows (9) ends to ensure a tight connection of the later with said ring, said bellows being tightly fitted on the punch sliding at its other end.

4. Tablet press according to claim 3, **characterized in that** said end part of the removable ring (11) is provided in the shape of an annular magnet (13) inserted on the external periphery of the ring body.

5. Tablet press according to claim 3, **characterized in that** said end part of the removable ring (11) forms a lot of housings (113) of an annular arrangement which are intended to accommodate a lot of magnets.

6. Tablet press according to any of claims 3 to 5, wherein the punches holder plate being made of a non-magnetic material, it includes, to cooperate by magnetic attraction with said magnetized end part of said ring, a magnetized ring attached at the bottom of said internal formation of the punches holder plate.

7. Tablet press according to claim 6, wherein said internal formation (12) of the punches holder plate includes a lot of cavities (120) intended to accommodate a lot of magnets constituting said ring.

8. Tablet press according to claim 6 or 7, **characterized in that** said internal formation (12) has a truncated form cooperating by centering effect with a truncated bearing complementary to the ring (11) at its end part.

9. Tablet press according to any one of claims 1 to 8, wherein each bellows (9) is made of an elastomer material in such a manner that, at its end opposite to the end with which it is attached to the removable ring (11), it tightly engages a throat (10) of the corresponding punch, making a stop to retain it axially.
